# EUROPEAN PATENT APPLICATION

(11) **EP 1 739 822 A1**
(43) Date of publication of application: **03.01.2007**
(21) Application number: 06012172.0
(22) Date of filing: 13.06.2006
(51) Int. Cl.: H02P 6/18

(54) **Three phase BLDC motor controller and control method thereof**

(30) Priority: 28.06.2005 KR 20050056626
(71) Applicant: Samsung Electronics Co., Ltd., Yeongtong-gu Suwon-si, Gyeonggi-do (KR)
(72) Inventor: Oh, Kwang-kyo, Seo-gu Gwanju-city (KR); Yoo, Han-joo, Gwangsan-gu Gwangju-city (KR); Hamaoka, Koji, Gwangsan-gu Gwangju-city (KR); Park, Pyeong-ki, Gwangsan-gu Gwangju-city (KR); Seo, Jeong-ho, Gwangsan-gu Gwangju-city (KR); Bae, Hun-yub, Buk-gu Gwangju-city (KR); Kim, Yun-jeong, Seo-gu Gwanju (KR)
(74) Representative: Grünecker, Kinkeldey, Stockmair & Schwanhäusser Anwaltssozietät

(57) **Abstract**

A method of controlling a three-phase brushless direct current (BLDC) motor, including (a) arranging a rotor of the three-phase BLDC motor by making a current flow to two of the three phases; (b) rotating the rotor through a phase shift; (c) detecting a position detecting point of time where a sign of an inductive electromotive voltage generated by a rotation of the rotor in a non-exciting phase is initially changed; and (d) calculating a rotation speed of the rotor based on a size of the inductive electromotive voltage of the non-exciting phase detected at the position detecting point of time. Thus, provided is a brushless direct current (BLDC) motor controller and a control method thereof which precisely detects a position detecting point of time of a rotor to determine a rotation speed of a rotor and minimizes noise and vibration during an initial drive of the three-phase BLDC motor.

## Description

### CROSS-REFERENCE TO RELATED APPLICATIONS

This application claims the benefit of Korean Patent Application No. 10-2005-0056626, filed on June 28, 2005, in the Korean Intellectual Property Office, the disclosure of which is incorporated herein by reference.

### BACKGROUND OF THE INVENTION

### Field of the Invention

The present invention relates to a three-phase brushless direct current (BLDC) motor controller and a control method thereof, and more particularly, to a three-phase brushless direct current (BLDC) motor controller which reduces vibrations during an initial drive of a BLDC motor, and a control method thereof.

### Description of the Related Art

Generally, a brushless direct current (BLDC) motor refers to a direct current motor where mechanical contact parts such as a brush and commutator are replaced by a motor controller. As the BLDC motor does not have the mechanical contact parts, it provides high speed and prevents noise and brush wear.

The BLDC motor controller requires position information of a rotor since it commutates through an inverter circuit using a switching element. A three-phase BLDC motor controller utilizes a counter electromotive voltage of one phase, i.e., an inductive electromotive voltage (hereinafter, to be referred to as an inductive electromotive voltage) to acquire the position information. That is, the three-phase BLDC motor controller may calculate a rotation speed of the rotor according to a size of the inductive electromotive voltage of one phase, and determine a position of the rotor according to time based on the calculated rotation speed. If the position of the rotor is determined, the phase shift point of time may be calculated and the rotor of the three-phase BLDC motor may rotate by shifting a phase at the calculated phase shift point of time.

However, the conventional three-phase BLDC motor controller rotates the rotor through synchronous operation, instead of rotating the rotor based on the size of the inductive electromotive voltage during the initial drive of the three-phase BLDC motor.

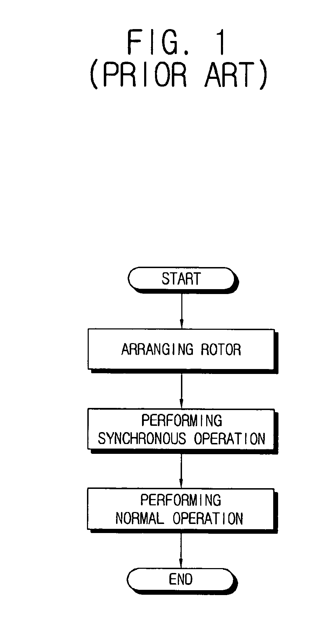

As shown in FIG. 1, the three-phase BLDC motor controller supplies a current to two of the three phases to arrange the rotor and to perform the synchronous operation. Then, the three-phase BLDC motor controller performs a normal operation after certain periods of time.

In the synchronous operation, the rotor rotates according to a preset phase shift timing and a pulse width modulation (PWM) duty rate. At this time, driving characteristics may be deteriorated according to a load torque of the three-phase BLDC motor.

For example, in a reciprocating compressor of a refrigerator having a BLDC motor, the load torque may be changed by difference of a refrigerant pressure between an input part and an output part, during the initial drive. If the synchronous operation is performed by adjusting the phase shift timing and the PWM duty rate by assuming a certain load torque, the assumed load torque may be not identical to an actual load torque. As such generated driving noise and vibration is increased. Also, an over current may occur as synchronization between the phase shift timing and the position of the rotor is abnormally implemented, thereby failing the initial drive.

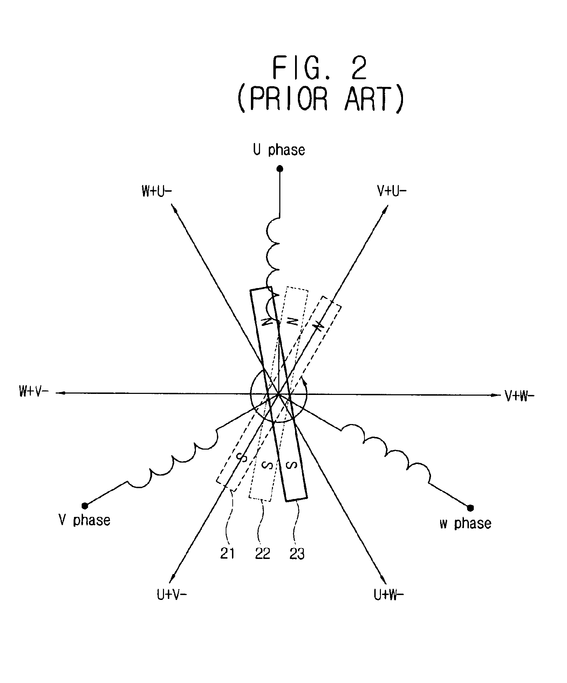

Meanwhile, the three-phase BLDC motor which does not perform the synchronous operation will be described with reference to FIG. 2.

As shown therein, if the phase is shifted to "U+W-" after the rotor is arranged in a direction of "U+V-", the rotor rotates from a position 21 to positions 22 and 23. However, the rotor does not pass through a coil of a phase "V", i.e., a non-exciting phase, until reaching "U+W-". A sign of the inductive electromotive voltage generated by a rotation of the rotor in the "V" phase, is not changed.

If the size of the inductive electromotive voltage is detected in the non-exciting phase even when the sign of the inductive electromotive voltage generated in the non-exciting phase is not changed, the rotation speed of the rotor calculated based on the detected inductive electromotive voltage may be not correct.

If the phase is shifted based on the wrong rotation speed of the rotor, the three-phase BLDC motor generates noise and vibration or fail in the initial drive.

If the precise point of time of detecting the inductive electromotive voltage is detected during the initial drive of the three-phase BLDC motor, the rotor may rotate without the synchronous operation, and the noise and vibration generated during the initial drive of the three-phase BLDC motor may be minimized.

### SUMMARY OF THE INVENTION

Accordingly, it is an aspect of the present invention to provide a brushless direct current (BLDC) motor controller and a control method thereof which precisely detects a position detecting point of time of a rotor to determine a rotation speed of a rotor and minimizes noise and vibration during an initial drive of the three-phase BLDC motor.

Additional aspects and/or advantages of the present invention will be set forth in part in the description which follows and, in part, will be apparent from the description, or may be learned by practice of the present invention.

The foregoing and/or other aspects of the present invention are also achieved by providing a method of controlling a three-phase brushless direct current (BLDC) motor, according to an embodiment of the present invention including (a) arranging a rotor of the three-phase BLDC motor by making a current flow to two of the three phases; (b) rotating the rotor through a phase shift; (c) detecting a position detecting point of time where a sign of an inductive electromotive voltage generated by a rotation of the rotor in a non-exciting phase is initially changed; and (d) calculating a rotation speed of the rotor based on a size of the inductive electromotive voltage of the non-exciting phase detected at the position detecting point of time.

According to another embodiment of the present invention, the (a) includes arranging the rotor by making the current flow from a first phase to a second phase, and the phase shift of the (b) includes that the current flow from the first phase to the second phase is changed into the current flow from the second phase to a third phase.

According to another embodiment of the present invention, the (a) includes arranging the rotor by making the current flow from the first phase to the second phase, and the phase shift of the (b) includes that the current flow from the first phase to the second phase is changed into the current flow from the first phase to the third phase and then changed into the current flow from the second phase to the third phase.

According to another embodiment of the present invention, the method further includes determining a next phase shift point of time after the (d) based on the calculated rotation speed of the rotor; and shifting the phase to make the current flow from the third phase to the first phase at the determined phase shift point of time.

According to another embodiment of the present invention, the phase shift point of time includes a point of time where an electric angle between the rotation position of the rotor and a direction of a magnetic field formed by the current flowing from the second phase to the third phase is approximately 60°.

The foregoing and/or other aspects of the present invention are also achieved by providing an apparatus for controlling a three-phase brushless direct current (BLDC) motor, including an inverter to drive the three-phase BLDC motor; a controller to control the inverter to arrange a rotor by making a current flow to two of the three phases, to determine a phase shift pattern which makes an initial position detecting point of time be a point of time where a sign of an inductive electromotive voltage of a non-exciting phase, and to shift a phase according to the determined phase shift pattern; and a speed detector to detect a size of the inductive electromotive voltage of the non-exciting phase at the position detecting point of time, and to calculate the rotation speed of the rotor based on the size of the detected inductive electromotive voltage.

According to another embodiment of the present invention, the controller controls the inverter to shift the phase by making the current flow from the second phase to a third phase according to the phase shift pattern if the controller controls to arrange the rotor by making the current flow from a first phase to a second phase.

According to another embodiment of the present invention, the controller controls the inverter to shift the phase by making the current flow from the first phase to a third phase for a predetermined period of time according to the phase shift pattern and then flow from the second phase to the third phase if the controller controls to arrange the rotor by making the current flow from the first phase to the second phase.

According to another embodiment of the present invention, the controller controls the inverter to determine a phase shift point of time based on the calculated rotation speed of the rotor, and to shift the phase by making the current flow from the third phase to the first phase according to the determined phase shift point of time.

According to another embodiment of the present invention, the phase shift point of time includes a point of time where an electric angle between the rotation position of the rotor and a direction of a magnetic field formed by the current flowing from the second phase to the third phase is approximately 60°.

### BRIEF DESCRIPTION OF THE DRAWINGS

The above and/or other aspects and advantages of the present invention will become apparent and more readily appreciated from the following description of the embodiments, taken in conjunction with the accompanying drawings of which:
FIG. 1 is a control flowchart of a conventional brushless direct current (BLDC) motor;
FIG. 2 illustrates a position detecting point of time according to a rotation of the conventional three-phase BLDC motor;
FIG. 3 is a control block diagram of a BLDC motor controller according to the present invention;
FIG. 4 illustrates a position detecting point of time according a rotation of the three-phase BLDC motor according to the present invention; and
FIGS. 5A and 5B illustrate phase shift patterns during an initial drive of the three-phase BLDC motor according to the present invention.

### DETAILED DESCRIPTION OF THE PREFERRED EMBODIMENTS

Reference will now be made in detail to the embodiments of the present invention, examples of which are illustrated in the accompanying drawings, wherein like reference numerals refer to like elements throughout.

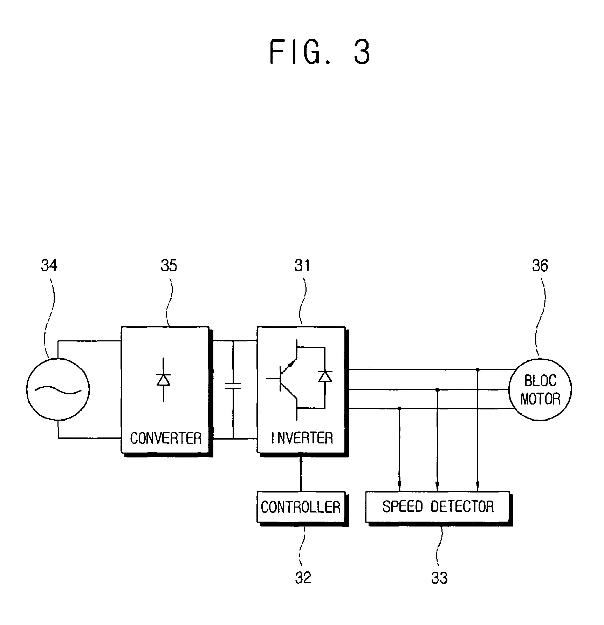

As shown in FIG. 3, a three-phase brushless direct current (BLDC) motor controller includes an inverter 31, a controller 32 and a speed detector 33. The three-phase BLDC motor controller may further include a converter 35 and a power supply 34.

The converter 35 converts AC power from the power supply 34 into DC power.

The inverter 31 converts the DC power converted by the converter 35 into three-phase AC power to be supplied to a three-phase BLDC motor 36. A switching element included in the inverter 31 performs functions as the brush and the commutator of a DC motor.

The controller 32 controls the inverter 31 to arrange the rotor by supplying a current to two of the three phases. The controller 32 determines a phase shift pattern to make an initial position detecting point of time become a point of time where a sign of an inductive electromotive voltage of a non-exciting phase is changed, and makes the phases shifted according to the determined phase shift pattern.

The speed detector 33 detects a size of the inductive electromotive voltage of the non-exciting phase at the position detecting point of time, and calculates a rotation speed of the rotor based on the size of the detected inductive electromotive voltage.

Then, the position detecting point of time of the rotor is precisely detected to determine the rotation speed of the rotor during the initial drive of the three-phase BLDC motor 36. The precise phase shift point of time of the three-phase BLDC motor 36 is determined by the rotation speed of the rotor which is calculated based on the size of the inductive electromotive voltage of the non-exciting phase detected at the position detecting point of time.

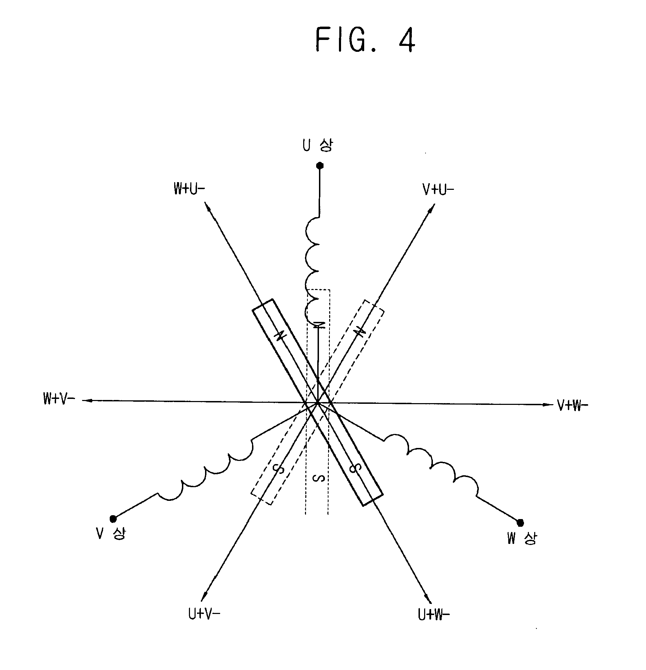

Hereinafter, a control process of the three-phase BLDC motor controller according to the present invention will be described in detail with reference to FIG. 4. Respective phases of the three-phase BLDC motor 36 are provided as "phase U", "phase V" and "phase W". As an example of the present invention, the controller 32 controls the inverter 31 to arrange the rotor by supplying the current from the phase U to the phase V.

"U+V-", "U+W-", "V+W-", "V+U-", "W+U-", "W+V-" refer to patterns of the current flowing in the respective phases of the three-phase BLDC motor 36. For example, "U+V-" refers to a phase shift pattern in which the current flows from the phase U to the phase V. "W+U-" refers to a phase shift pattern in which the current flows from the phase W to the phase U.

Initially, the rotor is arranged in a direction of "U+V-" by the current flowing from the phase U to the phase V. When the rotor passes through the non-exciting phase while rotating by the phase shift, the signal of the inductive electromotive voltage generated from the non-exciting phase is changed. If the point of time where the signal of the inductive electromotive voltage is changed, is identical to the position detecting point of time detecting the size of the inductive electromotive voltage, the rotation speed of the rotor may be detected through the size of the inductive electromotive voltage detected at the position detecting point of time.

For example, if the current flows from the phase V to the phase W after the rotor is arranged in the direction of "U+V-", i.e., if the phase is shifted to "V+W-", the rotor starts rotating counterclockwise. At this time, an electric angle between an arrangement direction of the rotor and a direction of a magnetic field formed by the "V+W-" phase shift may be approximately 120°.

The rotor passes through a coil of the phase U while it rotates. At this time, the sign of the inductive electromotive voltage is initially changed in the phase U, and the point of time where the sign of the inductive electromotive voltage is changed, is the position detecting point of time as the phase U is the non-exciting phase in a state that the phase is shifted to "V+W-". The electric angle between the position of the rotor and the direction of the magnetic field formed by the "V+W-" phase shift may be approximately 90°.

The size of the inductive electromotive voltage in the phase U is detected at the position detecting point of time, to be used to calculate the rotation speed of the rotor. Thus, the rotation speed of the rotor may be calculated precisely, and the phase shift point of time may be determined based on the calculated rotation speed of the rotor.

The phase shift point of time may be a point of time where the rotor reaches "U+W-" through the phase U. That is, the electric angle between the position of the rotor at the phase shift point of time and the direction of the magnetic field formed by the "V+W-" phase shift may be approximately 60°.

The phase is shifted to "V+U-" at the point of time where the rotor reaches the direction of "U+W-". Then, the point of time where the rotor passes through the phase W is the position detecting point of time as described above. The rotation speed of the rotor is calculated according to the inductive electromotive voltage of the phase W detected at the position detecting point of time, and the phase is changed to "W+U-" at the point of time where the rotor reaches the direction of "V+W-" based on the calculated rotation speed of the rotor.

Accordingly, the three-phase BLDC motor 36 precisely detects the rotation speed of the rotor. As the rotor rotates through the phase shift based on the precise rotation speed, noise and vibration generated during the initial drive may be minimized.

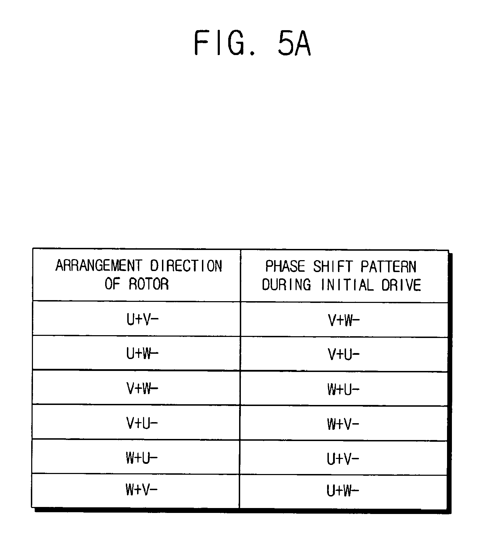

FIG. 5A illustrates an example of the phase shift pattern to calculate the precise rotation speed of the rotor during the initial drive of the three-phase BLDC motor 36 in relation to the arrangement direction of the rotor.

As shown therein, when the rotor is arranged in the direction of "U+V-", the phase is shifted to "V+W-". If the rotor is arranged in the direction of "U+W-", the phase is shifted to "V+U-". Thus, the position detecting point of time may be detected, where the sign of the inductive electromotive voltage generated by the rotation of the rotor in the non-exiting phase is initially changed. Also, the precise rotation speed of the rotor may be calculated based on the size of the inductive electromotive voltage of the non-exciting phased detected at the position detecting point of time.

FIG. 5A illustrates one phase shift pattern with respect to one arrangement direction of the rotor. There may be provided a method to improve initial acceleration characteristics of the three-phase BLDC motor 36.

For example, if the phase is shifted to "U+W-" for a short period of time before being shifted to "V+W-" while the rotor is arranged in the direction of "U+V-", the acceleration characteristics of the rotor is improved by the phase shift to "U+W-" and the precise rotation speed of the rotor may be calculated through the phase shift to "U+W-".

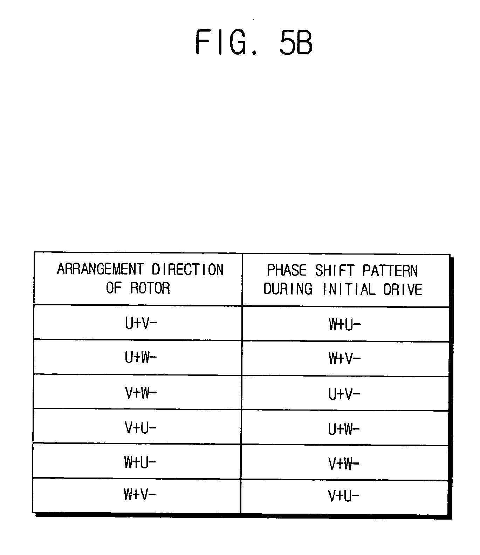

FIG. 5B illustrates an example of another phase shift pattern according to a rotating direction of the rotor.

As shown therein, if the phase is shifted to "W+U-" while the rotor is arranged in the direction of "U+V-", the rotor shown in FIG. 4 rotates clockwise and the sign of the inductive electromotive voltage detected in the phase V is changed when the rotor passes through the phase V. Then, the precise rotation speed of the rotor may be calculated based on the size of the inductive electromotive voltage of the phase V.

The process of shifting the phase based on the calculated rotation speed will be omitted as it corresponds to the process described above with reference to FIG. 5A.

Although a few embodiments of the present invention have been shown and described, it will be appreciated by those skilled in the art that changes may be made in these embodiments without departing from the principles and spirit of the invention, the scope of which is defined in the appended claims and their equivalents.

## Claims

1. A method of controlling a three-phase brushless direct current (BLDC) motor, comprising:
(a) arranging a rotor of the three-phase BLDC motor by making a current flow to two of the three phases;
(b) rotating the rotor through a phase shift;
(c) detecting a position detecting point of time where a sign of an inductive electromotive voltage generated by a rotation of the rotor in a non-exciting phase is initially changed; and
(d) calculating a rotation speed of the rotor based on a size of the inductive electromotive voltage of the non-exciting phase detected at the position detecting point of time.

2. The method according to claim 1, wherein the (a) comprises arranging the rotor by making the current flow from a first phase to a second phase, and the phase shift of the (b) comprises that the current flow from the first phase to the second phase is changed into the current flow from the second phase to a third phase.

3. The method according to claim 1, wherein the (a) comprises arranging the rotor by making the current flow from the first phase to the second phase, and the phase shift of the (b) comprises that the current flow from the first phase to the second phase is changed into the current flow from the first phase to the third phase and then changed into the current flow from the second phase to the third phase.

4. The method according to claim 2 or 3, further comprising determining a next phase shift point of time after the (d) based on the calculated rotation speed of the rotor; and shifting the phase to make the current flow from the third phase to the first phase at the determined phase shift point of time.

5. The method according to claim 4, wherein the phase shift point of time comprises a point of time where an electric angle between the rotation position of the rotor and a direction of a magnetic field formed by the current flowing from the second phase to the third phase is approximately 60°.

6. An apparatus for controlling a three-phase brushless direct current (BLDC) motor, comprising:
an inverter to drive the three-phase BLDC motor;
a controller to control the inverter to arrange a rotor by making a current flow to two of the three phases, to determine a phase shift pattern which makes an initial position detecting point of time be a point of time where a sign of an inductive electromotive voltage of a non-exciting phase, and to shift a phase according to the determined phase shift pattern; and
a speed detector to detect a size of the inductive electromotive voltage of the non-exciting phase at the position detecting point of time, and to calculate the rotation speed of the rotor based on the size of the detected inductive electromotive voltage.

7. The apparatus according to claim 6, wherein the controller controls the inverter to shift the phase by making the current flow from the second phase to a third phase according to the phase shift pattern if the controller controls to arrange the rotor by making the current flow from a first phase to a second phase.

8. The apparatus according to claim 6, wherein the controller controls the inverter to shift the phase by making the current flow from the first phase to a third phase for a predetermined period of time according to the phase shift pattern and then flow from the second phase to the third phase if the controller controls to arrange the rotor by making the current flow from the first phase to the second phase.

9. The apparatus according to claim 7 or 8, wherein the controller controls the inverter to determine a phase shift point of time based on the calculated rotation speed of the rotor, and to shift the phase by making the current flow from the third phase to the first phase according to the determined phase shift point of time.

10. The apparatus according to claim 9, wherein the phase shift point of time comprises a point of time where an electric angle between the rotation position of the rotor and a direction of a magnetic field formed by the current flowing from the second phase to the third phase is approximately 60°.
